# EUROPEAN PATENT APPLICATION

(11) **EP 1 767 095 A1**
(43) Date of publication of application: **28.03.2007**
(21) Application number: 04793379.1
(22) Date of filing: 29.10.2004
(51) Int. Cl.: A21D 15/02, A23L 3/36

(54) **METHOD OF COOLING SPONGY HEATED FOOD AND COOLING SYSTEM THEREFOR**

(30) Priority: 13.07.2004 JP 2004205396; 13.07.2004 JP 2004205391
(71) Applicant: Mayekawa Mfg. Co., Ltd., Tokyo 135-0046 (JP)
(72) Inventor: NARUMIYA, Tadaoki, c/o MAYEKAWA MFG. CO., LTD., Tokyo 1350046 (JP); OKADA, Hiroshi, c/o MAYEKAWA MFG. CO., LTD., Tokyo 1350046 (JP); SHINOZAKI, Satoshi, c/o MAYEKAWA MFG. CO., LTD., Tokyo 1350046 (JP); MIYAJIMA, Syoji, c/o MAYEKAWA MFG. CO., LTD., Tokyo 1350046 (JP)
(74) Representative: Strehl Schübel-Hopf & Partner
(86) International application number: PCT/JP2004/016459
(87) International publication number: WO 2006/006261

(57) **Abstract**

With respect to equipment for use in cooling operation conducted after final heating operation, such as baking for spongy heated foods, such as baked bread, it is intended to attain energy saving, architecture downsizing and simplification and space saving, to enhance yield and commercial value of spongy heated food and to prevent quality deterioration of the foods. There is provided a method and system **characterized by** comprising at least the first step (I) of applying water to the surface of spongy heated food (F) having undergone a final heating operation; the second step (II) of promoting the cooling of spongy heated food (F) by the utilization of latent heat of evaporation of applied water; and the third step (III) of retaining the spongy heated food (F) having been cooled by the second step in an atmosphere of dew point temperature higher than the surface temperature of spongy heated food (F) wherein the humidity is higher than in the second step so as to cause the spongy heated food (F) to absorb moisture.

## Description

### Technical Field

The present invention relates to a method and a system for cooling spongy heated foods such as baked bread, Chinese steamed bread and sponge cake, after a final heating process such as baking, steaming and frying. It is intended to shorten a cooling period by enhancing a cooling speed, and to attain energy saving and architecture downsizing, and to enhance yield and commercial value of spongy heated food and to prevent quality deterioration of the spongy heated foods.

### Background Art

For example, a sliced surface of baked bread having a high temperature is not smooth. Also when packaging the baked bread having a temperature higher than a packaging chamber, a dew condensation inside a packaging occurs. Therefore, a purpose of cooling baked bread after a baking process is to attain a smooth sliced surface and also to prevent a dew condensation inside the packaging.
In order to solve these problems, after a baking process, a cooling process of baked bread having undergone the baking process is performed by mounting baked bread on a shelf-like conveyor inside a production chamber, or by transferring baked bread on a bar conveyor, spiral conveyor or the like placed near the ceiling. The baked bread is cooled naturally by the cooling process at a room temperature of a production chamber for two to three hours thus to bring the core temperature to approximately 25°C which is a room temperature of a slicing/packaging chamber.

According to this method, without controlling the temperature and humidity inside the production chamber, fluctuations of bread temperature and water evaporation occur depending on seasons, time and relation with other production processes. Thus, in order to reduce the fluctuations, some adopts a more advanced cooling method of bread having the steps of providing a shelf-like conveyor or the like in a cooling chamber and controlling a set of a temperature and a wind speed blowing on a product or a set of a temperature and humidity.

The set of a temperature and humidity inside a cooling chamber as one room is controlled by providing two rooms in the cooling chamber, high temperature room and low temperature room; by controlling the temperature and humidity to 25 to 40°C and 70%RH in the higher temperature room, and 20 to 25°C and 60% RH (± 10%RH) in the lower temperature room; and by transferring the product from the higher temperature room to a lower temperature room. The wind speed against the product is 0.1 to 2m/sec.

However, all of these conventional methods focus on a temperature of a cooled product and a room temperature of a cooling chamber to determine the condition inside the cooling chamber and have no focus on water evaporation of bread.

JP62-531432B and JP8-70837A disclose an improved cooling method of food in which a temperature of a cooling chamber is set lower than that of the food, a relative humidity is set as high as saturated humidity. The cooling speed is enhanced and water evaporation from the food is controlled, thus to shorten a cooling period and improve yield rate and texture of the bread. However, when bread having a high temperature contacts the saturated air of 100%RH, the air temperature rises and relative humidity lowers due to sensible heat of the food, and water evaporation from the food cannot be evaded.

Water vapor is dispersed in the air to maintain humidity, when food contact the air, evaporative latent heat is from the food is unlikely to happen. Also, as humidity in the ambient air is saturated, water evaporation from the food is suppressed, and thus a cooling period cannot be shortened. This method requires large space and consumes more calories for the cooling.

As humidity inside the cooling chamber is high, problems such as microbes growing inside the chamber should be concerned.

JP8-103256A teaches an efficient method for cooling food in which water and air, or water alone is sprayed on a surface of food to keep the surface moist, cooling air is blown for cooling the food, and dry cooling air is supplied to cool and take surplus moisture from the food.

According to this related art, the cooling speed may be enhanced but a yield rate is lowered by applying a cooling step using the cooling air and a surplus moisture removal step using the dry cooling air, which causes water evaporation from the surface of the food, making the surface dry.

A freezing method of fully baked or half baked bread to prevent crust flaking and cracking and enhance bread texture is disclosed in JP55-034656B and Jp2003-219794A. According to these, water is sprayed, brushed or dipped on a bread surface before a freezing step (JP55-34656B) or after a freezing step (JP2003-219794A).

Further, in order to improve appearance and prevent cupping (concave on a top surface) of bread such as Pullman bread, JP8-029045B discloses a method to apply oil/emulsion water to baked bread before the core temperature reaches 80°C and below.

According to the conventional cooling methods above, the surface temperature of food is higher than the dew point temperature of the atmosphere and water evaporation offoodinevitably occurs. Further, yield rate of the food becomes unstable, lines and cracking appear on the surface layer as the layer being dry, and its quality such as dry texture deteriorates as the inner layer becomes dry.

In order to solve the texture problems of bread such as sandwich loaves, bread crust which is the hard surface layer is cut off and discarded when making sandwiches or toasting bread. This method will create unnecessary processes and wasted resources. This method does not improve the yield ratio, either.

### Disclosure of Invention

In view of the problems of the conventional methods, the present invention relates to a new and improved method and system of cooling spongy heated food such as baked bread, Chinese steamed bread and sponge cake after a final heating process such as baking, steaming and frying in order to achieve the following objects. The objects of the present invention are to contribute to environment preservation by achieving energy saving, downsizing and simplification of cooling facilities , and to enhance and stabilize a yield rate of the product, and to improve the product quality and to prevent the quality deterioration.

Especially, an important object is to provide a cooling method and system by cooling air, which minimizes water evaporation from the product as the water evaporation is inevitable when using cooling air.

In order to achieve the objects above, a first aspect of the present invention relates to a method of cooling spongy heated food having undergone a final heating process, comprising the steps of cooling the spongy heated food by cooling air, and moisturizing the spongy heated food by allowing the food to absorb moisture in the atmosphere of a temperature higher than the cooling step.

According to the first aspect, the spongy heated food is cooled by cooling air by the cooling step and the cooled food absorbs moisture on its surface or surface layer in the atmosphere of a temperature higher than the cooling step, which enhances a yield rate of the food after the cooling step, and prevents the formation of lines and cracks on the surface layer from the surface being dry, and also prevents deterioration of the product quality such as dry texture from the inner layer being dry, thus to produce a soft and moist product with a good appearance. As a result, a smaller amount of ingredients is used for making a food product, thereby reducing the production cost.

According to the first aspect, preferably the spongy heated food is cooled to make the surface temperature equal to or below a dew point temperature of the atmosphere of the moisturizing step. With this, the spongy heated food is maintained in the atmosphere of low temperature and low humidity, thereby accelerating the cooling step, preventing water evaporation from the inner layer, enhancing a yield rate, preventing the formation of lines and cracks on the surface layer and the quality deterioration such as dry texture due to the dryness in the inner layer.

When a temperature difference between the spongy heated food and the atmosphere is large, moisture evaporated from the inner layer of the spongy heated product is overly condensed near the surface layer and the condensed moisture is absorbed in the spongy heated product, forming overly moist layer called white ring or lines on the surface, and lowering the product value. Therefore, according to the first aspect, a temperature of the atmosphere needs to be adjusted so that the overly moist layer is not formed.

A second aspect of the present invention relates to a method of cooling spongy heated food having undergone a final heating process, comprising at least;
a first step of applying water to a surface of spongy heated food having undergone a final heating process;
a second step of promoting the cooling of the spongy heated food by utilization of latent heat of evaporation of applied water; and
a third step of retaining the spongy heated food having been cooled by the second step in an atmosphere of dew point temperature higher than the surface temperature of spongy heated food wherein the humidity is higher than in the second step so as to cause the spongy heated food to absorb moisture.

In the second aspect, the spongy heated food is cooled by at least three steps and cooling atmosphere and time of each step is adequately controlled. The spongy heated food taken out of a final heating processor such as baking, steaming and frying has a temperature of approximately 90 to 98°C. By the first step, on the surface of the spongy heated food having undergone the final heating process, water is sprayed or applied by a brush to form a thin layer of moisture. Therefore, the cooling of the spongy heated food is promoted by the utilization of latent heat of evaporation of applied water, and also evaporation of water contained in the spongy heated food is reduced in correspondence to the amount of applied water, thereby enhancing a yield rate.

It is very effective for enhancing the cooling of the spongy heated food to apply water to the spongy heated food because the spongy heated food has a very high temperature and therefore has a high water evaporation rate even in an atmosphere of high temperature and high humidity.

Thus, even in an atmosphere of high temperature and high humidity, water applied to the spongy heated food evaporates, latent heat of the evaporation taking a large amount of heat from the spongy heated food, and so an air-conditioning unit for adjusting a temperature and humidity of the atmosphere is not needed and normal indoor and outdoor environments of a process room suffice. More specifically, temperature may be 15 to 40°C and humidity may be 20 to 80%RH.

The spongy heated food moved to the second step has a temperature of 50 to 95°C at the hottest part. In the second step, the cooling of the spongy heated food is enhanced by the utilization of latent heat of evaporation of applied water, and water evaporation from a surface layer of inner layer of the spongy heated bread is prevented.

In the second step and especially in the first step wherein the spongy heated food immediately having undergone a final heating process has a comparatively high temperature, a temperature difference is large between the spongy heated food and the cooling atmosphere, which causes formation of overly moist layer called white ring or lines on the surface, and lowering the product value. Therefore, a temperature of the atmosphere needs to be adjusted so that the overly moist layer is not formed.

In order to prevent water evaporation from the surface and also from the inner layer, the atmosphere of the second step is of a low temperature in the range of 5 to 15°C and low humidity in the range of 30 to 60%RH. In this atmosphere, the surface layer of the spongy heated food is cooled faster, preventing water evaporation from the surface layer, maintaining the saturated state inside the crumb, thus to control water evaporation from inside.

In the third step, the spongy heated food having undergone the second step is retained in an atmosphere of dew point temperature higher than the surface temperature of spongy heated food wherein the humidity is higher than in the second step so as to cause the spongy heated food to absorb moisture evenly while moisture in the air being condensed. Preferably the temperature is 10 to 20°C and humidity is 60 to 90%RH.

Thus, the spongy heated food restores moisture to compensate the amount of moisture evaporated in the second step. The applied moisture keeps evaporating till being consumed by a consumer, but by controlling water evaporation during a cooling step in which a majority of total water evaporation of water after the final heating process happens, a yield rate of the spongy heated food is enhanced and the quality deterioration due to the dryness of the food is prevented.

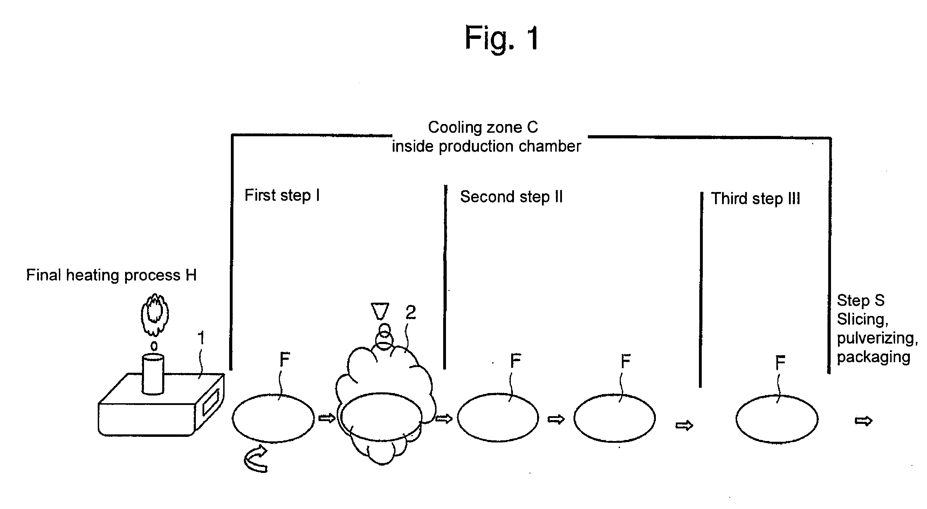

FIG. 1 is a schematized figure explaining the second aspect of the present invention. FIG. 1 shows a final heating process H, heating unit 1 such as oven, steamer, fryer and baking and boiling units for performing the final heating process on the spongy heated food. The spongy heated food F having undergone the final heating process is moved to a first step I in a cooling zone C, wherein the food F has a temperature of 90 to 98°C and wind speed on the food F is 0.1 to 2m/s.

In the first step I, water is sprayed on the food F in the atmosphere of 15 to 40°C and 20 to 80%RH so that the surface becomes wet evenly and the temperature of the food F becomes 98 to 50°C.

The sprayed food F is moved to the second step II and exposed to the atmosphere of 5-15°C and 30-60%RH in which evaporation of water applied in the first step and water contained in the food F occurs, lowering potential heat of the food F by evaporative latent heat, and lowering the temperature of the food F due to a heat radiation and heat transfer from the surface of the food F.

The spongy food having undergone the second step is moved to the third step III and exposed to the atmosphere of 10-20°C and 60-90%RH in which a dew point temperature of the atmosphere is higher than the surface temperature of the food F thus to cause the surface layer of the food to absorb moisture. The spongy food having undergone the first step to the third steps is moved to a step S for slicing, pulverizing and packaging.

Moreover, in the second aspect, it is preferable that the spongy heated food stays in the second step until the surface temperature becomes near the temperature of the surrounding atmosphere. By controlling the process hours of the second step for enhancing the cooling, water applied to the surface of the spongy heated food evaporates, securely preventing water evaporation from the inner layer of the spongy heated food.

Furthermore, in the first step of the second aspect, water may be applied evenly to an exposed surface of the spongy heated food immediately after the final heating process to form a layer of moisture thereon.

It is also preferable that an amount of water to be applied at a time is 0.1 to 2% in weight ratio of the spongy heated food and water is applied up to three times.

In the cooling method of the first and second aspects of the present invention, cooling air having a wind speed of 0.1 to 2m/s may be created in the atmosphere surrounding the spongy heated body in each step. The cooling air stir the atmosphere surrounding the spongy heated food in each step, thus to enhance a cooling effect.

In the cooling method of the first and second aspects of the present invention, it is preferable that an ambient air of the moisturizing step or the third step is moisture or a component which can be added to foods , so that the spongy heated food absorbs vaporized fragrant agents which are supplied to the atmosphere surrounding the spongy heated food.

For instance, vaporized fragrant agents such as vanilla and herbs can be added to the atmosphere surrounding the spongy heated food and the spongy heated food absorbs the vaporized fragrant agents, thus to give the desired flavor to the spongy heated food.

Moreover, in the first and second aspects of the present invention, it is also preferable to supply bacteriostatic agent to the atmosphere surrounding the spongy heated food thus to prevent a development of microorganisms on the surface and surface layer of the spongy heated food.

It is also preferable that a temperature of the atmosphere of the slicing step and packaging step following the cooling step is equal to or below the dew point temperature of the preceding cooling step or the surface temperature of the cooled spongy heated food thus to prevent dryness and surface condensation of the spongy heated food.

In the first and second aspects, it is preferable that the atmosphere of the slicing step and packaging step following the cooling step is equal to or below the dew point temperature of the preceding cooling step or the surface temperature of the cooled spongy food, thus to prevent dryness and surface condensation of the spongy heated food.

Further in the first and second aspects of the present invention, the spongy heated food is preferably frozen immediately after the cooling with or without being hermetically packaged in a packaging of low water vapor permeability.

It is also preferable in the first and second aspects that the spongy heated food is hermetically packaged in a packaging of low water vapor permeability and then freeze-stored.

In the first and second aspects, the spongy heated food may also be deterioration-packaged in the packaging of low air permeability such that the shape of the food is maintained in the atmosphere of -26.6644 to -66.661kPa.

Furthermore, the packaged spongy heated food having undergone the freezing step is maintained equal to or below-15°C during the freeze-storing, shipping, thawing and etc. The temperature variation should be ±1°C.

The cooling system of the third aspect of the present invention for cooling spongy heated food having undergone a final heating process, comprising:
a first zone for performing a first step of applying water on a surface of the spongy heated food,
a second zone for applying a second step of promoting the cooling of spongy heated food by utilization of latent heat of evaporation of applied water; and
a third zone for performing a third step of retaining the spongy heated food having been cooled by the second step in an atmosphere of dew point temperature higher than the surface temperature of spongy heated food wherein the humidity is higher than in the second step so as to cause the spongy heated food to absorb moisture.

In the above cooling system of the present invention, each cooling step is performed in a separate zone (space such as cooling chamber).

It is also preferable to perform the first, second and third steps sequentially in one zone (space).

The cooling system of the present invention preferably comprises a cooling chamber for performing the first, second and third steps, an adjusting atmosphere generator for generating and supplying an adjusting atmosphere to the cooling chamber to create an adequate atmosphere for each cooling step in the cooling chamber, sensors provided in the cooling chamber for sensing temperature, humidity, gas density and surface temperature of the spongy heated food, a control unit for controlling a supplying amount of atmosphere adjusting components such as air, cooling/heating source, water vapor, fragrant agents and bacteriostatic agent based on the values detected by the sensors.

With this structure, it is also possible to perform all of first, second and third steps in one cooling chamber. The adjusting atmosphere generator generates an adjusting atmosphere which is adequate for each of the steps, and supply the adequate atmosphere adjusting components to the cooling chamber, and the control unit controls a supplying amount of atmosphere adjusting components such as air, cooling/heating source and water vapor based on the detected value of temperature, humidity, gas density and surface temperature of the spongy heated food.

In the first aspect of the present invention, the spongy heated food is cooled by the cooling air, and absorbs moisture at the surface or surface layer of the food in an atmosphere having a temperature higher than the preceding cooling step using cooling air, thereby enhancing a yield rate of the spongy heated food having undergone the cooling step, and prevents formation of lines and cracking due to the surface layer being dry, and quality deterioration such as dry texture due to the inner layer being dry.

The cooling method of the second aspect comprises at least;
a first step of applying water to a surface of spongy heated food having undergone a final heating process;
a second step of promoting the cooling of spongy heated food by the utilization of latent heat of evaporation of applied water; and
a third step of retaining the spongy heated food having been cooled by the second step in an atmosphere of dew point temperature higher than the surface temperature of spongy heated food wherein the humidity is higher than in the second step so as to cause the spongy heated food to absorb moisture.

Therefore, the cooling of the spongy heated bread is accelerated by the utilization of latent heat of evaporation of applied water. For example, the cooling time for cooling the spongy heated bread to 25°C is shorted and evaporation of water contained in the spongy heated food is reduced in correspondence to the amount of applied water, and in the third step the spongy heated food absorbs moisture at the surface, thereby enhancing a yield rate of the spongy heated food and preventing formation of lines and cracking due to the surface layer being dry, and quality deterioration such as dry texture due to the inner layer being dry.

By shortening the cooling time in this manner, it becomes possible to downsize production facilities, reduce production cost and save energy for the cooling. Furthermore, by suppressing the deterioration of the spongy heated food due to the dryness, properties of spongy heated food can be maintained longer. In regard to selling spongy heated food, the transition from production on orders to production by plan can be realized due to an extended storage time, and the spongy heated food can be stored for a longer time, thereby making possible expansion of the market.

Furthermore, quality deterioration of spongy heated food is reduced, possibly eliminating the need to remove portion of poor quality such as crusts of a bread loaf during the reprocessing, and to consumers' benefit, enabling a long term storage of the spongy heated food with good appearance and soft texture.

According to the second aspect, it is preferable that the atmosphere surrounding the spongy heated food in the first step is 15 to 40°C and 20 to 80%RH, and the atmosphere surrounding the spongy heated food in the second step is 5 to 15°C and 30 to 60%RH, and the atmosphere surrounding the spongy heated food in the third step is 10 to 20°C and 60 to 90%, such that the occurrence of overly moist layer called white ring is prevented and full effects of present invention are achieved.

According to the second aspect of the present invention, it is also preferable that the spongy heated food stays in the second step until the surface temperature of the spongy heated food becomes near the temperature of the surrounding atmosphere, thereby achieving the full effects of the second step. Specifically, the surface layer of the spongy heated food is cooled fast by the second step of promoting the cooling, preventing water evaporation from the surface layer, maintaining the saturated state inside, thus to control water evaporation from inside.

Furthermore, according to the first and second aspects, airflow having a wind speed of 0.1 to 2m/s may be created in the atmosphere surrounding the spongy heated food in each of the steps. The cooling air stirs the atmosphere surrounding the spongy heated food in each step, thus to enhance a cooling effect.

An ambient air of the moisturizing step or the third step may be moisture or components which can be added to foods and further by supplying vaporized fragrant agents to the atmosphere surrounding the spongy heated food, the spongy heated food absorbs the vaporized fragrant agents, thereby adding desired flavor to the spongy heated food and enhancing the added value of the spongy heated food.

It is also preferable to supply bacteriostatic agent to the atmosphere surrounding the spongy heated food thus to prevent a development of microorganisms on the surface and surface layer of the spongy heated food.

It is also preferable that a temperature of the atmosphere of the slicing step and packaging step following the cooling step is equal to or below the dew point temperature of the preceding cooling step or the surface temperature of the cooled spongy heated food thus to prevent dryness and surface condensation of the spongy heated food.

By packaging the spongy heated food hermetically with a packaging material of low water vapor permeability immediately after the cooling and freezing the packaged spongy heated food, weight loss of the freeze-stored spongy heated food due to water evaporation is prevented and yield rate is enhanced. A packaging being smaller and tighter on content shows better effects in preventing water evaporation.

Alternatively, the spongy heated food may be deaerating-packaged with a packaging material of low air permeability such that the shape of the food is maintained in the atmosphere of -26.6644 to -66.661kPa. As the packaging is tight on the content and empty space in the packaging is small, an amount of saturated water vapor to fill the space in the packaging becomes very small, thereby reducing the water evaporation amount of the spongy heated food.

A cooling system of the third aspect of the present invention comprises;
a first zone for performing a first step of applying water to a surface of the spongy heated food,
a second zone for performing a second step of promoting the cooling of the spongy heated food by the utilization of latent heat of evaporation of applied water; and
a third zone for performing a third step of retaining the spongy heated food having been cooled by the second step in an atmosphere of dew point temperature higher than the surface temperature of the spongy heated food wherein the humidity is higher than in the second step so as to cause the spongy heated food to absorb moisture. The cooling method and the effects of the second aspect of the present invention can be fully achieved by this cooling system.

Preferably, the first, second and third steps may be performed sequentially in one zone/space.

It is also preferable that the cooling system further comprises:
a cooling chamber for performing the first, second and third steps;
an adjusting atmosphere generator for supplying an adjusting atmosphere to the cooling chamber to create an adequate atmosphere for each cooling step in the cooling chamber;
sensors provided in the cooling chamber for detecting temperature, humidity, gas density and surface temperature of the spongy heated food;
a control unit for controlling a supplying amount of atmosphere adjusting components based on the values detected by the sensors.

This structure enables to perform the first, second and third steps in one set of the cooling chamber and achieves simplification and downsizing of the cooling facilities and energy and resource saving.

The control unit operates feedback control of the adjusting atmosphere generator to control a feeding amount of atmosphere adjusting components such as air, cooling/heating source and water vapor based on the detected values of temperature, humidity and gas density inside the cooling chamber and the surface temperature of the spongy heated food, thus to reflect the atmosphere inside the cooling chamber and control the cooling operation precisely.

### Brief Description of Drawings

[FIG.1] Schematized figure explaining a second means of the present invention.
[FIG.2] Perspective view of a first embodiment of the present invention.
[FIG.3] Table showing test results of the first embodiment and comparative example.
[FIG.4] Table showing sensory evaluations of the first embodiment and comparative example.
[FIG.5] Graph showing temperature changes of the first embodiment and comparative example.
[FIG.6] Graph showing yield rate of a product of the first embodiment and comparative example.
[FIG.7] Graph showing sensory evaluations of the first embodiment and comparative example.
[FIG.8] Block diagram showing a cooling system of the third embodiment of the present invention.

### Best Mode for Carrying Out the Invention

Preferred embodiments of the present invention will now be detailed with reference to the accompanying drawings. It is intended, however, that unless particularly specified, dimensions, materials, relative positions and so forth of the constituent parts in the embodiments shall be interpreted as illustrative only not as limitative of the scope of the present invention.

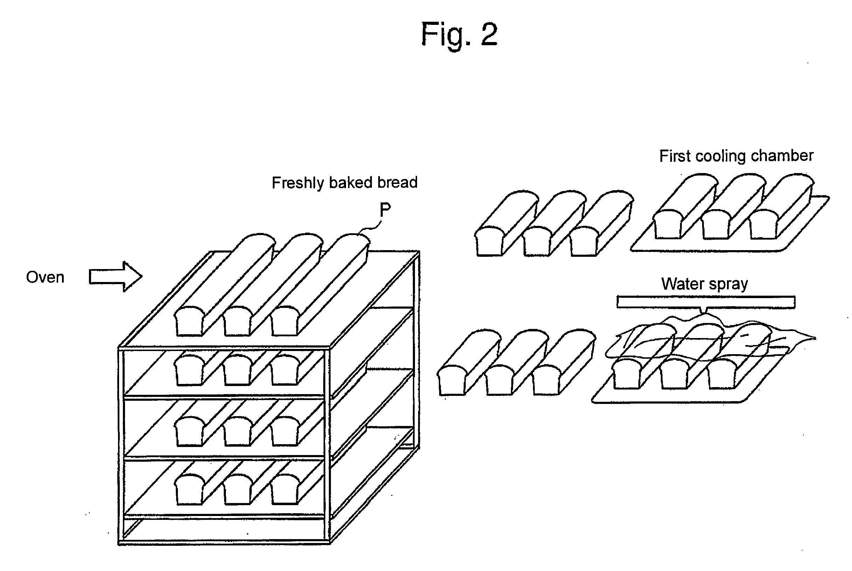

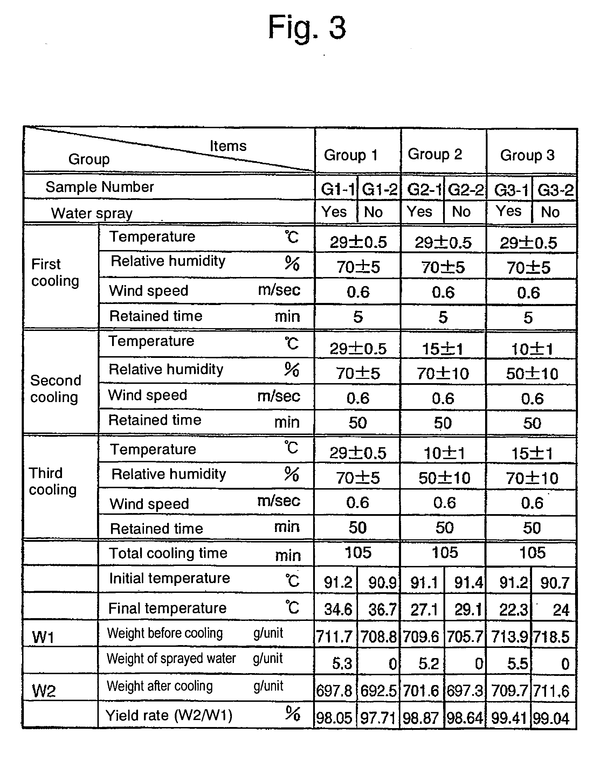

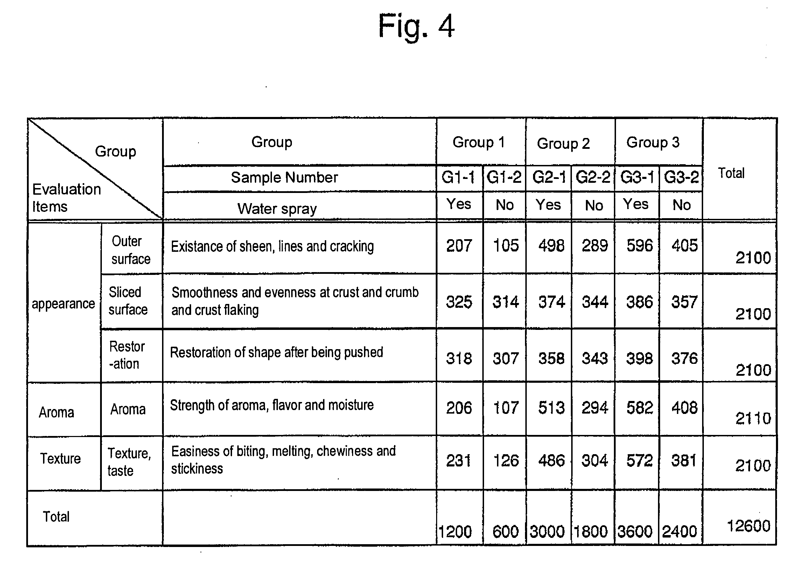

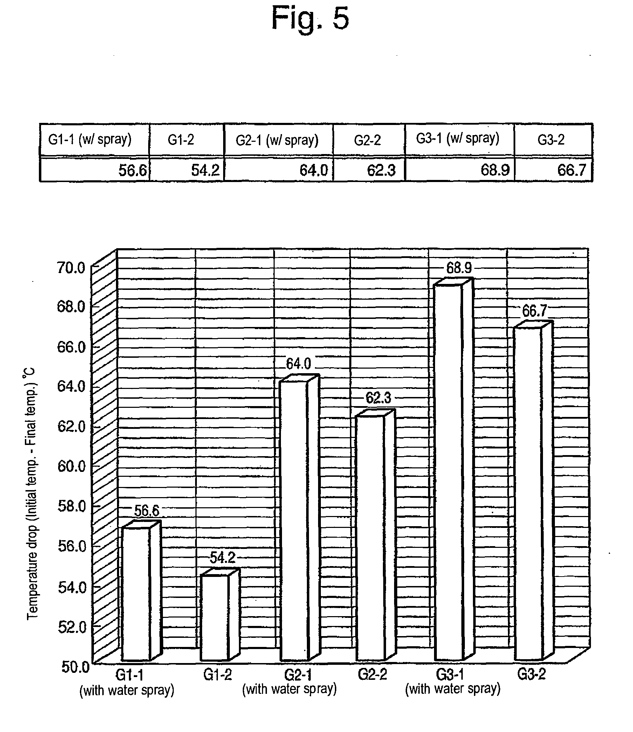

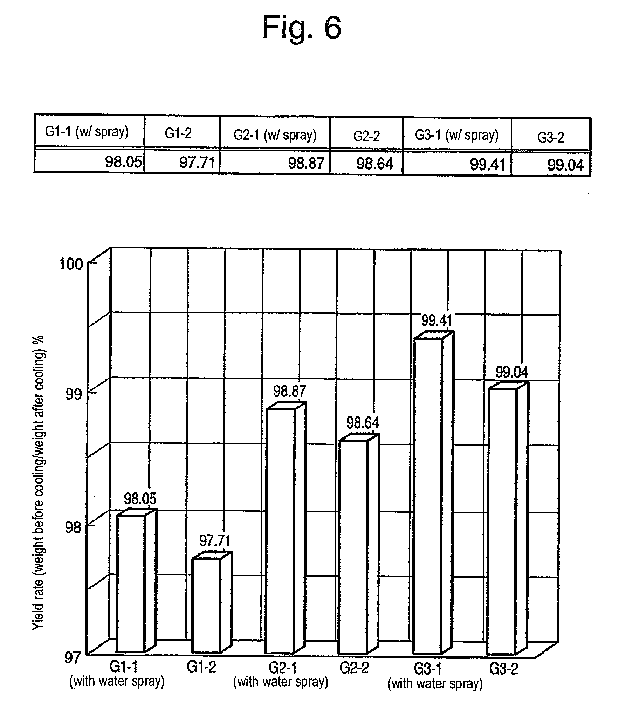

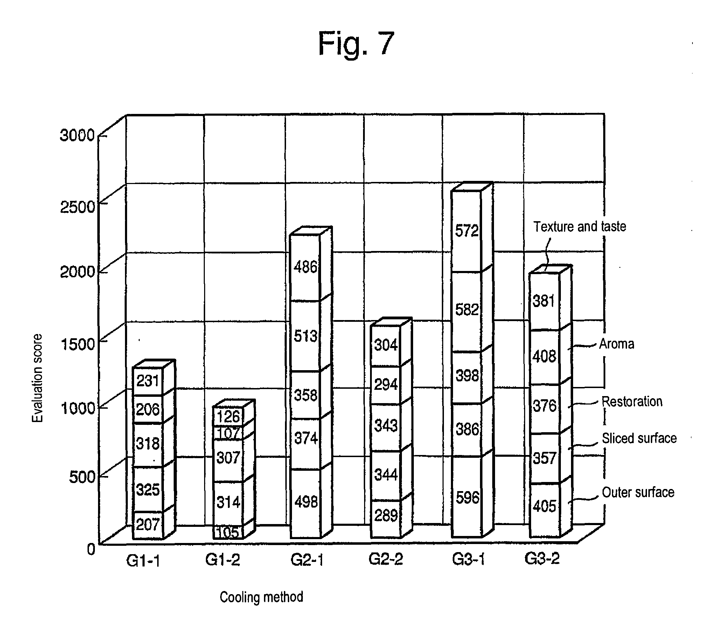

FIG.2 is a perspective view of a first embodiment of the present invention. FIG.3 is a table showing test results of the first embodiment and comparative example. FIG.4 is a table showing sensory evaluations of the first embodiment and comparative example. FIG.5 is a graph showing temperature changes of the first embodiment and comparative example. FIG.6 is a graph showing yield rate of a product of the first embodiment and comparative example. FIG.7 is a graph showing sensory evaluations of the first embodiment and comparative example.

### First Embodiment

After bread is baked by a conventional production method using facilities in a bread-making factory, the bread is removed from a baking pan and six bread loaves were randomly taken out as samples (hereinafter called samples) from a batch of bread loaves. The bread used here was whole-wheat English bread containing honey. A first set of three samples and a second set of three samples were placed on two different trays of large meshes made of stainless wires in a first cooling zone as shown in FIG.2. The first cooling zone of 29 ± 0.5°C and 70 ± 5%RH was inside the production chamber having an oven with its door being open and is an area uninfluenced by radiant heat from the oven.

Then fine water mist was sprayed evenly on the surface of the first set of samples placed on the tray to apply 0.50 ± 5% of water in weight ratio of the bread, avoiding water spray on anything else.

A thin layer of moisture was formed evenly on the surface of the sprayed samples without crust swelling or water dripping on the top surface. The second set of samples should keep the distance from the first set so that the sprayed water does not get on the second set.

After the water spraying step, each sample from the first and second sets was placed parallel on three new trays of large meshes made of stainless wires with a clearance of 50mm in the length direction, making first, second and third groups each of which consists of one water sprayed sample and one non-sprayed sample.

Hereinafter, sprayed samples were described as G1-1, G2-1 and G3-1 in first, second and third groups respectively and non-sprayed samples were described as G1-2, G 2-2 andG3-2 in first, second and third groups respectively.

For the first group, one of the conventional cooling methods was used to cool the samples for 105 minutes in a first cooling chamber under the following condition of the cooling chamber: 29 ± 0.5°C, 70 ± 5%RH, wind speed against the sample 0.6m/sec.

For the second group, another conventional method was used to cool the samples, for 5 minutes in a first cooling chamber under the condition of 29 ± 0.5°C, 70 ± 5%RH, wind speed against the sample 0.6m/sec, and for 50 minutes in a second cooling chamber being capable of setting an ambient temperature arbitrarily under the condition of 15 ± 1°C, 70 ± 10%RH, wind speed against the sample 0.6m/sec, and for 50 minutes under the condition of 10 ± 1°C, 50 ± 10%RH, wind speed against the sample 0.6m/sec.

For the third group, a cooling method of the present invention was used, in which temperature and humidity of the third cooling were set higher than those of the second cooling. Specifically, the samples were cooled for 5 minutes in a first cooling chamber under the condition of 29 ± 0.5C, 70 ± 5%RH, wind speed against the sample 0.6m/sec, and for 50 minutes in a second cooling chamber which is capable of setting an ambient temperature arbitrarily under the condition of 10 ± 1°C, 50 ± 10%RH, wind speed against the sample 0. 6m/sec, and for 50 minutes under the condition of 15 ± 1°C, 70 ± 10%RH, wind speed against the sample 0.6m/sec.

A temperature of each sample was taken by inserting a temperature sensor into a geometric core of the sample in order to obtain time-series change of a core temperature of the samples from the beginning to the end of the cooling.

Each sample was weighed when it was taken out from the batch as a sample, and immediately after being water-sprayed in the case of sprayed samples, and after completing the cooling process.

Each sample was weighed after completing the cooling process completed, immediately sliced equally into ten pieces and packaged hermetically in an air-filled packaging made of resin film. The packaged sample was stored for 48 hours at a room temperature (25°C) and evaluated for sensory tests.

The above cooling test was repeated five times and the average of the initial temperature and weight of the applied water, the cooling conditions of the atmosphere and the cooling time are shown in FIG. 3 and a result of the sensory tests are shown in FIG.4.

The sensory test was performed by twenty testers. The testers took out sample bread loaves for the first, second and third groups from a batch of loaves baked in the same oven at the same time (hereinafter called same sample group). The samples were cooled by a designated method of each group.

After being stored, the samples were evaluated by the twenty testers without disclosing cooling methods. The samples were evaluated by the testers on the scale of 6 to 1 with respect to evaluation items of FIG.4, in order of excellence of the sample sensory. FIG.4 shows the total score of the five tests on each sample group. In each time of the tests, samples were evaluated according to 6:excellent, 5: fairly good, 4:good, 3: slightly poor, 2: poor, 1:worst.

The details of the sensory test are described below.

Samples are evaluated on scale from 6 to 1 because a same facility does not always produce a food product of the same quality. For example, bread dough of a same batch kneaded in a same mixer differs in fermentation progress and density from the first formed loaf and the last formed loaf. In like wise, a first batch and a second batch baked in a same oven show different baking results and post-baking conditions.

Therefore, it is comparatively difficult to evaluate bread based on an absolute number such as 6 for a sample with one line on a crust surface and 1 for a sample with six or more lines or according to the size of lines. Specifically, every sample is already different at the time of being taken out from a batch immediately after baking. A fair evaluation can be done by evaluating each sample of the same sample group with respect to the evaluation items in order of sensory quality.

Thus, this evaluation method was adopted for the present invention.

When sample G3-1 of Group 3 was compared with sample G3-2 of Group 3, observed were a raise in yield rate as shown in FIG.3 and FIG. 6 based on FIG. 3, and a temperature decrease of the core by 2°C for the same cooling time as shown in FIG.5 based on FIG.3.

Lower core temperature, i.e. faster cooling and higher yield rate were observed in the sprayed samples in every sample group. The sprayed samples were cooled faster because the sprayed water on the crumb surface evaporated, taking evaporative latent heat.

A temperature drop of a product depends on atmosphere pressure and temperature and a temperature of the water spray. Under the atmosphere pressure, heat of approximately 2,218.6j per gram of water was drawn from a sample. Therefore, the heat quantity drawn from a sample due to a heat transfer from the sample to the ambient air, and the heat quantity lost due to heat radiation from the sample, and a quantity of the evaporative latent heat of the sprayed water were added together.

For example, 5g of water was sprayed on a sample which had specific heat of 2.930235J/°Cg and a weight of 700g/unit. The averaged temperature drop due to evaporative latent heat of the applied water can be calculated as follows,
Evaporative latent heat: 5g×2,218.6J/g=11,093J
Temperature drop: 11,093J ÷ (700g × 2.930235J/°Cg)=5.4°C

The averaged temperature drop is an average of the temperatures of all the samples. Due to a heat transfer of a sample, temperatures of a sample even out eventually in ever portion thereof in a considerable amount of time. However, in the embodiments of the present invention, a core temperature and a surface temperature remain different in a given cooling time of the present invention. An evaporative latent heat of sprayed water adhering on the surface does not have much effect on a drop in a core temperature.

As can be seen from FIG. 6 led from FIG.3, in each group the samples having been water- sprayed on the crust surface has a higher yield rate. In other words, water evaporation is less in a sprayed sample because sprayed water adhering on the crust evaporates first and then water contained in the sample evaporates.

Further, Group 3 adopting a cooling method of the present invention showed the highest yield rate among the three sample groups.

This is because a sample was cooled to make the surface temperature equal to or below a dew point temperature by a second cooling step, and the sample was processed to make the surface temperature above the dew point temperature by a third cooling step in which water vapor adheres on the surface of the sample in the ambient air.

The second cooling condition of an atmosphere is a temperature of 10°C and below and high humidity of 60%RH and above or low humidity of 40% and below. Maintaining the second cooling condition bears many technical difficulties. Construction of the facility is very costing. Dew condensation tends to occur on surfaces of walls, floors, ceilings and machinery provided inside a cooling chamber, which can cause a development of microorganisms. Sprayed water adhering to a surface of a sample cannot easily evaporate at a low temperature and high humidity, which can cause swellings on the surface layer of the sample. Water contained in the sample tends to evaporate from an inside and when the cooling step completes, water vapor moving to the surface condenses near the surface, which has a risk of causing a layer containing a large amount of irreversible water which is herein called white ring. Thus, in consideration of lowering cost of the facility construction and product quality, the second cooling condition was set as described above.

Immediately after cooling, the cooled samples of each group were sliced and packaged. The packaged samples were stored at a room temperature (25°C) for 48 hours and evaluated for sensory qualities. The sensory evaluation items were appearance, aroma and texture. The appearance was judged based on appearances of an outer surface and a sliced surface and also a restoration of shape after pushing a sliced sample with a hand. The aroma was judged based on existence and strength of bread-specific aroma and undesired smell. The texture was judged based on easiness of biting (poorly processed bread gets chewy at and around the crust, which causes non-smooth biting and flaking of crust) and textures such as moisture, melting in a mouth, dryness and stickiness on teeth. All these items were evaluated by twenty testers in scale of 6 to 1.

FIG.4 shows a result of tests performed by twenty testers five times on a set of six samples each time. FIG.7 shows a result of FIG.4 as a graph.

As can be seen from FIG. 4, each sample which was water-sprayed evenly on its surface obtained a great score in the sensory tests. The samples which got the best score were samples of Group 3 in which samples were water-sprayed by a first cooling step and cooled by a second cooling step at a lowest humidity and by a third cooling step at a temperature higher than the dew point temperature of the second cooling step according to the cooling method of the present invention.

The cooling method of the present invention, in comparison to conventional cooling methods, enhances yield rate and quality of the product by cooling the product in a short time, saving energy, space and ingredients.

### Second embodiment

A second embodiment of the present invention is detailed hereinafter.

Samples were sliced and packaged in a similar manner as the first embodiment, and stored in a freezing chamber of -25°C for 24 hours. And then frozen samples were stored in a freeze-storing chamber of -20°C for 14 days and the frozen samples were thawed unattended without removing the packaging in a room at a room temperature (20°C). The samples were weighed and evaluated for sensory tests when a core temperature reached 18°C and above. Hereinafter, the samples which were freeze-stored and thawed will be called freeze-stored samples F1-1, F1-2, F1-3, F2-1, F2-2, F2-3, F3-1, F3-2, F3-3 corresponding to the samples of the first embodiment.

The sensory tests showed that the sample F3-1 which was water-sprayed and freeze-stored showed only small difference from the sample G3-1 of the first embodiment which were water-sprayed and not frozen, freeze-stored, or thawed. The difference was so small that the testers could hardly recognize.

On the other hand, every tester could tell a difference between the sample F2-1 of the second embodiment and the sample G2-1 of the first embodiment.

The testers could also tell a distinctive difference between the sample F1-1 of the second invention and the sample G1-1 of the first invention.

In comparison with the samples of the first embodiment which were not water-sprayed namely G1-2, G2-2, G3-2, the samples of the second embodiment which were freeze-stored without water spray, namely F1-2, F2-2, F3-2 showed more lines and cracking on a surface and also crust flaking and formation of a thick surface layer in the order of F1-2, F2-2 and F3-2.

The samples F1-1 andF2-1 which were water-sprayed and freeze-stored showed less occurrence of the above problems compared to the samples without water spray.
The sample F3-1 showed no line or cracking on a surface, or crust flaking or forming of a thick surface layer.

According to the second embodiment, in comparison to the samples of the first embodiment which were cooled and then stored at a room temperature (20°C) for 48 hours, in samples of the second embodiment, excluding the sample F3-1, were observed a loss of bread elasticity, occurrence of granular structure and lines, cracking on the surface, a loss of sheen surface and deterioration of melting texture.

According to the result of the weight and sensory tests of the second embodiment, as with the samples of the first embodiment which were stored at a room temperature (20°C) for 48 hours, among the samples which were water-sprayed evenly, the sample which were processed by the second cooling process at the lower temperature and humidity and by the third cooling step at the higher temperature equal or above the dew point temperature of the second cooling step showed the best result.

Therefore, it can be concluded that the most effective cooling method is the cooling method of the present invention having a first cooling step for spraying water to form an even layer of moisture on a surface of bread, and a second cooling step for cooling bread in the atmosphere of a lower temperature and lower humidity, and a third cooling step for cooling bread at a temperature higher than the dew point temperature of the second cooling step, the first cooling step having the highest temperature and humidity among all three cooling steps. Compared to conventional methods, the method of the present invention enables a cooling of a food product in short time and enhances a yield rate and quality of the product.

The cooling method of the present invention saves energy, space and ingredient, improving the productive efficiency due to the transition of production on orders to production by plan using the freezing method, downsizing production facilities, reducing product discarding due to time degradation, and reducing production cost by utilizing resources. Thus, it becomes possible to provide products of good quality and also to reduce the effects on the environment.

### Third embodiment

A third embodiment of the present invention is explained below.

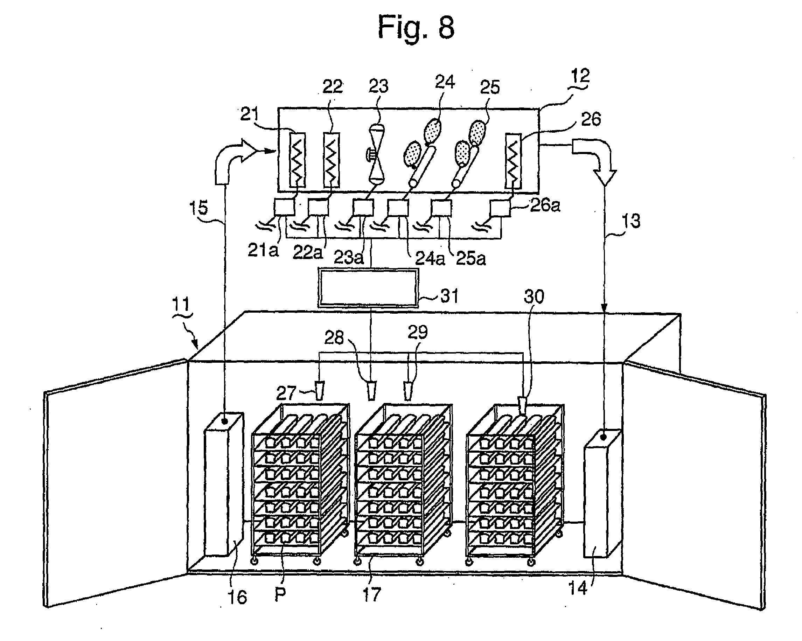

FIG.8 is a block diagram showing a cooling system of the third embodiment of the present invention. The cooling system comprises a cooling chamber 11 for applying cooling steps to bread having undergone a final heating process, an adjusting atmosphere generator 12 for supplying an adjusting atmosphere which is formed by air, water vapor and other gases to create an adequate atmosphere for each cooling step in the cooling chamber 11, a supply duct 13 for supplying the adjusting atmosphere generated by the adjusting atmosphere generator 12 to the cooling chamber, an outlet 14 for feeding the adjusting atmosphere to the cooling chamber 11, an intake duct 15 for taking in the atmosphere from the cooling chamber 11 and returning the atmosphere to the adjusting atmosphere generator 12, an inlet 16 of the intake duct 15, and movable racks 17 being capable of storing bread P therein after the final heating process.

The adjusting atmosphere generator 12 is provided with a first heat exchanger 21 for dehumidifying being connected to a heat supply device of cooling heat source not shown via an automatic valve 21a for adjusting a flow amount of dehumidifying air, a second heat exchanger 22 for cooling being connected to a heat supply device via an automatic valve 22a for adjusting a flow amount of cooling air, a fan 23 being connected to an air supply source not shown via an inverter 23a capable of changing a frequency, a steam generator 24 being connected to a vaporizer or a water heating device both not shown via a flow control valve or a heat source controller 24a for heating water, a vaporizer 25, and a third heat exchanger 26.

The vaporizer 25 for vaporizing flavor liquids such as vanilla and herbs or bacteriostatic agent, or spraying agents dissolved in solvent, is connected to a supply source of the agents via an adjuster 25a for adjusting a spray amount. The third heat exchanger 26 of heating air is connected to a heat source not shown via an adjuster 26a such as a valve for adjusting a flow amount in the case of the heat source being steam or liquid such as warm water, or a electric controller in the case of the heat source being a electric heater.

The cooling chamber 11 is further provided with a temperature sensor provided inside the chamber 11, a humidity sensor 28, a gas density sensor 29, and crust temperature sensor 30. A control unit 31 operates feedback control of the adjusters 21a, 22a, 23a, 24a, 25a and 26a based on the detected values.

In the cooling system of the third embodiment, the adjusting atmosphere generator 12 generates the adjusting atmosphere to create an adequate atmosphere in the cooling chamber 11 for each cooling step. In this case, the control unit 31 monitors the detected values from each sensor. The control unit 31 performs feedback control such that the adjusting atmosphere generator 12 generates adequate adjusting atmosphere to adjust the atmosphere inside the cooling chamber. Thus, a precise adjustment of the atmosphere appropriate for each cooling step can be achieved.

Also, only one cooling chamber 11 is used to apply each cooling step sequentially, thus to simplify and downsize the facilities and save energy and resource.

Further, the vaporizer 25 feeds bacteriostatic agent to the cooling chamber 11, thereby preventing a development of microorganisms, and applies flavor to bread P, thereby enhancing the added value of bread P.

In the third embodiment, each cooling step was performed sequentially in one cooling chamber. However, each cooling step may be performed in a separate cooling chamber. In that case, bread P should be moved either on a conveyor moving among each cooing chamber, or on a movable rack in a similar manner as the third embodiment. Partitions such as air curtains maybe provided to separate each cooling chamber.

The cooling system of the third embodiment can positively perform the cooling method of the present invention, thereby achieving the above described effects of the present invention.

### Industrial Applicability

The present invention provides a cooling method of spongy heated food products having undergone a final baking process, in which water is applied for accelerating the cooling due to evaporative latent heat of the applied water, and then the atmosphere is created such that the vaporization of water contained inside the product does not occur, and consequently water is adhered on the product. In this manner, it becomes possible to shorten the cooling time and improves a yield rate and product quality.

In comparison to conventional cooling methods, the cooling method of the present invention saves energy, space and ingredient, improving the productive efficiency due to the transition of production on orders to production by plan using the freezing method, downsizing production facilities, reducing product discarding due to time degradation, and reducing production cost by utilizing resources. Thus, it becomes possible to provide products of good quality and also to reduce the effects on the environment.

## Claims

1. A method of cooling spongy heated food having undergone a final heating process by cooling air, comprising the step of:
cooling the spongy heated food by cooling air; and
moisturizing the spongy heated food by allowing the spongy heated food to absorb moisture in the atmosphere of a temperature higher than the cooling step.

2. A method of cooling spongy heated food according to claim 1, wherein in the cooling step the spongy heated food is cooled by cooling air to make the surface temperature of the spongy heated food equal to or below a dew point temperature of the atmosphere of the moisturizing step.

3. A method of cooling spongy heated food having undergone a final heating process by cooling air, comprising at least:
a first step of applying water to the surface of the spongy heated food having undergone a final heating process;
a second step of promoting the cooling of the spongy heated food by the utilization of latent heat of evaporation of applied water; and
a third step of retaining the spongy heated food having been cooled by the second step in an atmosphere of dew point temperature higher than the surface temperature of the spongy heated food wherein the humidity is higher than in the second step so as to cause the spongy heated food to absorb moisture.

4. A method of cooling spongy heated food according to claim 3, wherein the atmosphere surrounding the spongy heated food of the first step is a normal indoor or outdoor environment of a process room.

5. A method of cooling spongy heated food according to claim 3, wherein the atmosphere surrounding the spongy heated food in the first step is 15 to 40°C and 20 to 80%RH, and the atmosphere surrounding the spongy heated food in the second step is 5 to 15°C and 30 to 60%RH, and the atmosphere surrounding the spongy heated food in the third step is 10 to 20°C and 60 to 90%RH.

6. A method of cooling spongy heated food according to claim 1 or 3, wherein airflow having a wind speed of 0.1 to 2m/s is created in the atmosphere surrounding the spongy heated food in each of the steps.

7. A method of cooling spongy heated food according to claim 3, wherein the spongy heated food is retained in the atmosphere of the second step until the surface temperature of the spongy heated food becomes near the temperature of the surrounding atmosphere.

8. A method of cooling spongy heated food according to claim 3, wherein the first step is performed by applying water evenly to an exposed surface of the spongy heated food immediately after the final heating process to form a layer of moisture thereon.

9. A method of cooling spongy heated food according to claim 3, wherein an amount of water to be applied each time is 0.15 to 2% in weight of the spongy heated food and the water is applied up to three times.

10. A method of cooling spongy heated food according to claim 1 or 3, wherein an ambient air of the moisturizing step or the third step is moisture or a component which can be added to foods.

11. A method of cooling spongy heated food according to claim 10, wherein in the moisturizing step or the third step, the spongy heated food absorbs vaporized fragrant agents which are supplied to the atmosphere surrounding the spongy heated body.

12. A method of cooling spongy heated food according to claim 10, wherein bacteriostatic agent is supplied to the atmosphere surrounding the spongy heated food thus to prevent a development of microorganisms on a surface and surface layer of the spongy heated food.

13. A method of cooling spongy heated food according to claim 1 or 3, wherein the cooled spongy heated food is sliced and then packaged in an atmosphere of equal to or above the dew point temperature of the preceding cooling step or the surface temperature of the cooled spongy heated food.

14. A method of cooling spongy heated food according to claim 1 or 3, wherein the cooled spongy heated food is frozen without packaging immediately after the cooling.

15. A method of cooling the spongy heated food according to claim 1 or 3, wherein the cooled spongy heated food is hermetically packaged by a packaging material of low water vapor permeability immediately after the cooling and the packaged spongy heated food is frozen.

16. A method of cooling the spongy heated food according to claim 1 or 3, wherein the spongy heated food is freeze-stored with hermetically packaged in a packaging of low water vapor permeability.

17. A method of cooling the spongy heated food according to claim 1 or 3, wherein the spongy heated food is deterioration-packaged with a packaging material of low air permeability such that the shape of the spongy heated food is maintained in the atmosphere of -26.6644 to -66.661kPa.

18. A method of cooling spongy heated food according to claim 1 or 3, wherein the spongy heated food is packaged and frozen, and the frozen spongy heated food is maintained at -15°C and below during the freeze-storing, shipping, thawing and etc. and the temperature variation is ±1°C.

19. A system of cooling spongy heated food having undergone a final baking process, comprising
a first zone for performing a first step of applying water on a surface of the spongy heated food,
a second zone for performing a second step of promoting the cooling of spongy heated food by utilization of latent heat of evaporation of applied water; and
a third zone for performing a third step of retaining the spongy heated food having been cooled by the second step in an atmosphere of dew point temperature higher than the surface temperature of spongy heated food wherein the humidity is higher than in the second step so as to cause the spongy heated food to absorb moisture.

20. A method of cooling spongy heated food according to claim 3, wherein the first, second and third steps are performed sequentially in one zone/space.

21. A system of cooling spongy heated food according to claim 19, further comprising:
at least one cooling chamber for performing the first, second and third steps;
an adjusting atmosphere generator for generating and supplying an adjusting atmosphere to the cooling chamber to create an adequate atmosphere for each cooling step in the cooling chamber;
at least one sensor provided in the cooling chamber for sensing temperature, humidity, gas density and surface temperature of the spongy heated food; and
a control unit for controlling a supplying amount of atmosphere adjusting components to the adjusting atmosphere generator based on the values detected by the sensors.
